# EUROPÄISCHE PATENTSCHRIFT

(11) **EP 0 586 921 B1**
(45) Veröffentlichungstag und Bekanntmachung des Hinweises auf die Patenterteilung: **09.04.1997**
(21) Anmeldenummer: 93112987.8
(22) Anmeldetag: 13.08.1993
(51) Int. Cl.: B29C 51/28

(54) **Vorrichtung zum Formen des Halsbereiches an einer Kunststoffhalbschale**
Forming device for making the neck portion to a plastic shell
Dispositif pour le formage d'un goulot à une demi-coquille en plastique

(30) Priorität: 10.09.1992 DE 4230305
(43) Veröffentlichungstag der Anmeldung: 16.03.1994
(73) Patentinhaber: Tetra Laval Holdings & Finance SA, 1009 Pully (CH)
(72) Erfinder: Reil, Wilhelm, D-64625 Bensheim (DE); Korus, Bernhard, D-64289 Darmstadt (DE); Bub, Heiko, D-55294 Bodenheim (DE)
(74) Vertreter: Weber, Dieter, Dr.

(56) Entgegenhaltungen:
- DE-A- 4 005 972
- FR-A- 1 397 457
- FR-A- 2 204 775
- GB-A- 472 796
- US-A- 3 642 975

## Beschreibung

Die Erfindung betrifft eine Vorrichtung zum Formen und Tiefziehen des Halsbereiches am Rand einer Kunststoffhalbschale, mit einem Tiefziehwerkzeug und einer Gegendruckplatte, die in zwei Richtungen relativ zueinander bewegbar sind, wobei das Tiefziehwerkzeug schalenförmig einen Tiefziehhohlraum umgibt und in der Seitenwand am Rand eine Ausnehmung aufweist.

Aus der DE-PS 40 05 972 ist eine Vorrichtung zum Tiefziehen einer einseitig offenen Schale aus Kunststoff ähnlich der vorstehend bezeichneten Art bekannt. Mit dieser Vorrichtung können beispielsweise zwei Halbschalen tiefgezogen werden, die danach unter Ausnützung ihrer Restwärme miteinander so verschweißt und vereinigt werden, daß sich eine hohle Fließmittelpackung ergibt. Bei dieser bekannten Vorrichtung wurde für das Befüllen, Verschließen und Ausgießen am Rand jeder Kunststoffhalbschale ein Halsbereich so mit einem halbzylindermantelförmigen Kragen ausgestaltet, daß nach dem Vereinigen der beiden Halbschalen ein Oberboden mit Loch entsteht, an dessen Außenrand ein zylindermantelförmiger Kragen aus dem Oberboden der Packung heraussteht.

Um im Halsbereich am Rand der Kunststoffhalbschale eine Ausformung zur Bildung dieses Kragens zu schaffen, hat man die beheizte Gegendruckplatte mit einem teilweise kegelstumpfförmigen Vorsprung ausgestattet, der beim Zusammendrücken mit einer Gegenheizplatte in eine Ausnehmung derselben eingefahren werden kann, wobei die zwischen Gegendruckplatte und Gegenheizplatte eingelegte Kunststoffplatte an einer Stelle am Rand, wo an der Kunststoffhalbschale der Haisbereich entstehen sollte, eine Verformung erfolgte. Diese war und ist erforderlich, damit der Rand der Kunststoffplatte, bevor sie zur Halbschale tiefgezogen wurde, dichtend in die Ausnehmung des Tiefziehwerkzeuges eingelegt und angedrückt werden konnte. Bei der bekannten Vorrichtung erfolgte dies über den Vorsprung der vertikal hin-und herbewegbaren und heizbaren Gegendruckplatte. Diese war sowohl horizontal gegenüber dem Tiefziehwerkzeug als auch gegenüber der Gegenheizplatte relativ bewegbar, war andererseits aber auch vertikal von einer Arbeitsposition zur nächsten relativ zum Tiefziehwerkzeug bewegbar, um nämlich das Werkstück, die ebene Kunststoffplatte, von der Erwärmungsposition in die Tiefziehposition zu bewegen und dann das Tiefziehen in Gestalt der Halbschale zu ermöglichen.

Für das Tiefziehen muß die Kunststoffplatte auf entsprechend hohe Temperatur erwärmt sein, und dies erfolgte im bekannten Fall zwischen verschiedenen Gegendruckplatten und Gegenheizplatten mit dem Nachteil, daß im Bereich der Ausnehmung der Gegenheizplatte die Kunststoffplatte nicht ausreichend erwärmt wurde, und dies ausgerechnet an einer Stelle, wo eine Verformung im Halsbereich erfolgen mußte. Man ist daher dazu übergegangen, die Kunststoffplatte vor dem Ausformen bzw. Vorformen des Halsbereiches zu überhitzen, damit der Ausform-und Dehnprozeß überhaupt möglich wurde. Das aber führte mit Nachteil zu ungleichmäßigen Streckungen im Material. Außerdem hat sich der Nachteil gezeigt, daß durch die zweistufige Behandlung der Kunststoffplatte, nämlich das Vorformen des Halsbereiches in der Erwärmungsposition und später das Tiefziehen in einer davon entfernten Tiefziehposition, die Gegendruckplatte die Kunststoffplatte im wesentlichen nur über Sauger festhielt. Bei der Vorformung im Halsbereich am Rand der Kunststoffplatte reichte die Saugkraft häufig nicht aus mit der Folge, daß das Kunststoffblatt bereichsweise wegwanderte. Diese unerwünschte Wanderbewegung führte zu Deformationen im Halsbereich und insbesondere bei dem gewünschten Kragen am Loch der späteren Packung. Die sich bei der fertigen Packung ab und zu ergebenden deformierten Kragen führten weiterhin zu Undichtigkeiten.

Der Erfindung liegt daher die Aufgabe zugrunde, die Form- und Tiefziehvorrichtung der eingangs genannten Art so zu verbessern, daß die Deformationen des Kragens am Rand einer Kunststoffhalbschale und auch das Überhitzen der Kunststoffplatte vermieden werden.

Diese Aufgabe wird erfindungsgemäß dadurch gelöst, daß die Gegendruckplatte in der dem Tiefziehwerkzeug zugewandten Anlagefläche wenigstens eine Öffnung mit einem sich dahinter anschließenden Aufnahmeraum aufweist, in dem ein elastisches, in wenigstens zwei Stellungen bewegbares Formteil derart angebracht ist, daß dieses in der ersten zurückgezogenen Stellung sich bündig hinter der Anlagefläche befindet und in der zweiten Dichtstellung in die Ausnehmung am Rand des Tiefziehwerkzeuges hineinragt.

Durch diese erfindungsgemäß neuen Maßnahmen kann erreicht werden, daß die Heizplatten eine der jeweils gegenüberliegenden Seite zugewandte, im wesentlichen ebene Oberfläche haben. Dadurch kann die ursprünglich ebene Kunststoffplatte in gutem Wärmekontakt eben an die jeweilige Heizplatte angelegt und durchgreifend erwärmt werden. Dieses Verfahren kann bis in die letzte Erwärmungsposition fortgeführt werden, aus welcher die auf Tiefziehtemperatur aufgewärmte Kunststoffplatte dann abgegeben und vor das Tiefziehwerkzeug befördert wird. Die Zeit des Erwärmens wird dadurch wesentlich verlängert, und es ist möglich, die Verformung des Halsbereiches am Rand der zunächst noch ebenen Kunststoffplatte, die später zur Kunststoffhalbschale wird, nur noch im Tiefziehbereich vorzunehmen. Das Formen erfolgt also nicht mehr in zwei sondern mit Vorteil nur noch in einer Stufe. In dieser Stufe, nämlich in der Tiefziehposition, können Tiefziehwerkzeug und Gegendruckplatte mechanisch fest derart aneinandergepreßt werden, daß die Kunststoffplatte vor dem Tiefziehen rahmenartig fest gehaltert wird, auch wenn erst der Ausformvorgang des Halsbereiches am Rand vorgenommen wird. Dadurch ist ein Wegwandern des Kunststoffblattes gegenüber der Gegendruckplatte ausgeschlossen.

Vorteilhaft ist es gemäß der Erfindung ferner, wenn das elastische Formteil aus Gummi besteht, außen zwei Verankerungsfüße und in der Mitte einen der Kontur der Ausnehmung am Rand des Tiefziehwerkzeuges entsprechendes Mittelteil aufweist, das über ein Scharnier mit den Verankerungsfüßen verbunden ist. Zwar kann das Formteil aus vielen elastomeren Materialien hergestellt werden, gegebenenfalls sogar aus einem Verbund zwischen nicht elastischen und elastischen Bereichen, die Verwendung von Gummi ist aber für das elastische Formteil von besonderem Vorteil. Die Formung aus Gummi kann vielgestaltig sein. Der teilweise kegelstumpfförmige Vorsprung der eingangs beschriebenen, bekannten Vorrichtung wird also erfindungsgemäß durch das Formteil ersetzt, welches hinter der Anlagefläche der Gegendruckplatte solange verschwindet bzw. innerhalb der Außenkontur der Gegendruckplatte verbleibt, wie die Kunststoffplatte erwärmt wird. Erst wenn die Kunststoffplatte nach ausreichender Erwärmung in die Tiefziehposition befördert worden ist, tritt das elastische Formteil und hier für die eigentliche Verformungsarbeit dessen Mittelteil in Tätigkeit. Das elastische Formteil kann durch die Verankerungsfüße in dem erwähnten Aufnahmeraum festgehalten verbleiben, während das Mittelteil sich aus dem Raum durch die Anlagefläche hindurch nach außen vorspringend bewegen kann. Bei dieser Bewegung wird die davorliegende Kunststoffplatte, natürlich nur im Randbereich, ergriffen und in einer Art ausbeulenden Bewegung verformt. Zwischen dem Mittelteil des elastischen Formteils und seinen Verankerungsfüßen ist ein Scharnier vorgesehen, welches in Draufsicht L-förmig, Z-förmig oder in jeder anderen Weise gebogen ausgestaltet sein kann. Damit ist es möglich, die außen angeordneten Verankerungsfüße des Formteiles festzuhalten, während durch mechanische oder durch Fließmittel der Mittelteil zur Verformung des Halsbereiches am Rand der Kunststoffplatte bewegt werden kann. Diese Bewegung erfolgt aus dem Bereich hinter der Anlagefläche der Gegendruckplatte in den Bereich außerhalb deren Außenkontur durch die besagte Öffnung in der Anlagefläche hindurch. Diese kleine Öffnung braucht nur das Mittelteil durchtreten zu lassen, kann also recht klein ausgebildet sein, hat etwa die Maße der Projektion des gewünschten Haisbereiches der Kunststoffhalbschale. Nur diese kleine Öffnung fehlt in der letzten Erwärmungsposition zum Erwärmen der Kunststoffplatte, weil die Gegenheizplatte hier eine oder mehrere kleine Öffnungen hat. Dies beeinträchtigt den Erwärmungsprozeß aber fast nicht, und die Beeinträchtigung ist jedenfalls gegenüber der bei der bekannten Vorrichtung vernachlässigbar.

Bei weiterer vorteilhafter Ausgestaltung der Erfindung ist die Höhe des elastischen Formteils etwa gleich der Höhe der Öffnung in der Gegendruckplatte und etwa gleich der Höhe des Halses der Kunststoffhalbschale. Dieser Hals entspricht dem besagten Kragen, und dessen Höhe ist also gleich der Höhe des Halbzylindermantels an der späteren Kunststoffhalbschale. Es versteht sich, daß zum Anbringen einer zweckmäßigen Ausgießeinrichtung an das Loch im Oberboden einer Flüssigkeitspackung der Kragen nicht besonders hoch sein muß. Daher ist auch die Höhe des Halses der Kunststoffplatte gemäß der Erfindung höchstens 20 mm, liegt vorzugsweise im Bereich zwischen 5 und 15 mm, wobei ein ganz besonders bevorzugter Betrag der Höhe des Halses und damit auch der Höhe der Öffnung in der Gegendruckplatte 10 mm ist.

Die quer zu dieser Höhe gemessene Breite des Mittelteils liegt zwischen 20 und 50 mm, vorzugsweise 30 und 45 mm, wobei ein ganz bevorzugter Wert 37 mm beträgt.

Bei dieser besonders bevorzugten Ausführungsform liegen die Verankerungsfüße in einem Gesamtabstand zwischen 60 und 90 mm voneinander, vorzugsweise etwa 75 mm im Abstand voneinander.

Ferner kann man erfindungsgemäß vorsehen, daß der Aufnahmeraum in der Gegendruckplatte Mittel zur Halterung der Verankerungsfüßte des elastischen Formteils aufweist und mit Fließmittelöffnungen versehen ist. Zweckmäßigerweise kann der Aufnahmeraum dadurch besonders einfach und preisgünstig hergestellt werden, daß auf einer rückwärtigen Heizplatte eine mit Löchern versehene Kontaktplatte aufgesetzt und an dieser befestigt wird, wobei sich der Aufnahmeraum im wesentlichen in dieser Kontaktplatte befindet. In dieser können durch Stahlwinkel oder dergleichen die Verankerungsfüße des elastischen Formteils festgelegt werden, gegebenenfalls sogar bei der Anbringung der Kontaktplatte an der Heizplatte, welche gemeinsam die Gegendruckplatte bilden. Die Heizplatte, d.h. der rückwärtige Teil der Gegendruckplatte, kann zweckmäßigerweise mit Fließmittelöffnungen versehen sein, an welche sich Leitungen anschließen. Hier kann man zweckmäßigerweise Flüssigkeiten oder vorzugsweise Luft als Fließmittel vorsehen, die mit entsprechender Steuerung dafür sorgt, daß der Mittelteil des elastischen Formteiles aus der besagten Öffnung in der Anlagefläche so herausgedrückt wird, daß das elastische Formteil aus dieser Anlagefläche nach vorn heraussteht mit der Folge, daß der davor befindliche Randbereich der Kunststoffplatte verformt wird.

Zweckmäßig ist es erfindungsgemäß auch, wenn auf der äußeren, dem Tiefziehwerkzeug zugewandten Oberfläche des Mittelteils des elastischen Formteils eine Kante vorgesehen ist. Diese Kante oder Schulter verhindert beim Tiefziehen ein Wegdrücken des Formteils infolge Überdruck im Tiefziehwerkzeug. Das elastische Formteil wird ja dazu verwendet, die zum Formen des Halsbereiches erforderliche Ausnehmung am Rand des Tiefziehwerkzeuges abzudichten. Das Tiefziehwerkzeug umgibt schalenförmig den Tiefziehhohlraum, dessen Volumen nach vorn von der aufgelegten ebenen Kunststoffplatte zwar abgedeckt und damit auch abgedichtet wird, zur Seite im Halsbereich der später zu formenden Kunststoffhalbschale befindet sich aber die erwähnte Ausnehmung, die ein Tiefziehen, d.h. einen Überdruck oder Unterdruck im Tiefziehhohlraum solange verhindern würde, bis sie noch nicht abgedichtet ist. Das elastische Formteil hat eine gewisse Fläche, welche die Ausnehmung am Rand des Tiefziehwerkzeuges bedeckt, und der im Tiefziehhohlraum entstehende Druck versucht, das Mittelteil dieses elastischen Formteils aus der Ausnehmung am Rand des Tiefziehwerkzeuges herauszudrücken. Gerade um dies zu vermeiden, ist erfindungsgemäß die erwähnte Kante vorgesehen.

Vorteilhaft ist es gemäß der Erfindung auch, wenn die Gegendruckplatte mit einer Mehrzahl von Öffnungen mit sich dahinter erweiternden Aufnahmeräumen versehen ist. Auf diese Weise kann eine größere Kunststoffplatte verwendet werden, um gleichzeitig eine ganze Reihe von Kunststoffhalbschalen zu formen, bei denen der Halsbereich in gleicher oder ähnlicher Weise ausgestaltet werden kann. Mit einem Arbeitstakt können dann mehrere Halbschalen geformt werden, wie dies an sich auch schon bei bekannten Vorrichtungen der Fall ist.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. Es zeigen:
- Figur 1: schematisch die Seitenansicht von Gegenheizplatten und Gegendruckplatten sowie des Tiefziehwerkzeuges, wie sie auch bei der bekannten Vorrichtung mit festen Vorsprüngen bzw. Ausnehmungen betätigt werden können, um das Anwendungsgebiet der erfindungsgemäßen Vorrichtung besser darzustellen,
- Figur 2: abgebrochen, perspektivisch und schematisch den oberen Teil eines Tiefziehwerkzeuges mit eingelassenem Halsbereich am Rand des Werkzeuges,
- Figur 3: die Draufsicht auf die Gegenheizplatte mit der Mehrzahl von Öffnungen, bei denen die sich dahinter erweiternden Aufnahmeräume gestrichelt dargestellt sind, rechts davon ist eine Seitenansicht dargestellt,
- Figur 4: die Draufsicht auf das elastische Formteil,
- Figur 5: eine teilweise abgebrochen und im Schnitt dargestellte Draufsicht auf das Formteil, wenn man in Figur 4 von oben nach unten blickt,
- Figur 6: eine Querschnittsdarstellung entlang der Linie VI-VI der Figur 5,
- Figur 7: abgebrochen und schematisch rechts das Tiefziehwerkzeug mit noch nach außen offenem Tiefziehhohlraum und der links angeordneten, dem Tiefziehwerkzeug gegenüberliegenden Gegendruckplatte und
- Figur 8: die Gegendruckplatte nach dem Herausblasen des Mittelteils des elastischen Formteils.

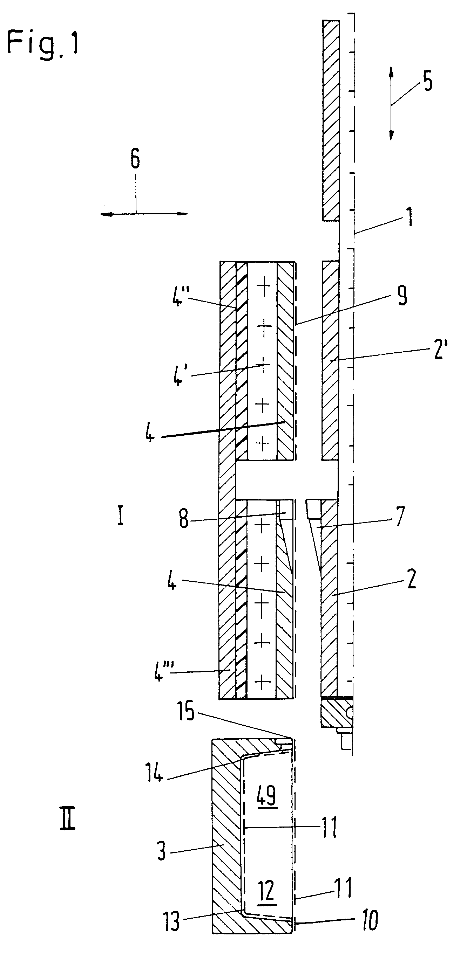

Gemäß Figur 1 ist schematisch in der Mitte ein sogenannter Vorschubwärmebacken 1 gezeigt, an welchem verschiedene Gegendruckplatten 2, 2' in verschiedenen Positionen übereinander angeordnet sind, wobei hier nur die unterste Position I dargestellt ist, unter welcher in der Position II ein Tiefziehwerkzeug 3 dargestellt ist. Der Gegendruckplatte 2 liegt im Abstand die Gegenheiz4 mit der Heizung 4', einer Isolierplatte 4'' und einer Trägerplatte 4''' gegenüber, welche mehrere Gegenheizplatten 4 übereinander haltern kann. Der Vorschubwärmebacken 1 kann in vertikaler Richtung gemäß Doppelpfeil 5 nach oben und unten bewegt werden, wobei er in Figur 1 in der oberen Stellung gezeigt ist, und die hier zweifach vorgesehenen Gegenheizplatten 4 sind demgegenüber horizontal in Richtung des Pfeiles 6 hin- und herbewegbar, in Figur 1 sind sie in der linken Position gezeigt, in welcher sie sich im Abstand von der Gegendruckplatte 2 befinden.

Bei der bekannten Vorrichtung trägt die Gegendruckplatte oben einen teilweise kegelstumpfförmigen Vorsprung 7, und entsprechend ist in der Gegenheizplatte 4 eine Ausnehmung 8 so vorgesehen, daß beim Zusammenfahren der beiden Platten 2 und 4 der Vorsprung 7 in der Ausnehmung 8 Platz hat.

Gestrichelt ist die Kunststoffplatte 9 eingezeichnet. Sie ist in der Erwärmungsposition I ebenfalls gerade, d.h. als ebene Platte dargestellt, weil dies entweder der Zustand vor dem Formen des Halsbereiches ist oder den Rand darstellt nach dem Ausformen des Halsbereiches.

Deshalb ist auch in der Tiefziehposition II die gestrichelte Linie sowohl außen für den in der Ebene liegenden Rand 10 der Halbschale 11 als auch innen gezeigt, wo bereits die Seitenwände 12, der Boden 13 und auch der Oberboden 14 mit dem halbzylindermantelförmigen Hals 15 in Kragenform ausgestaltet ist.

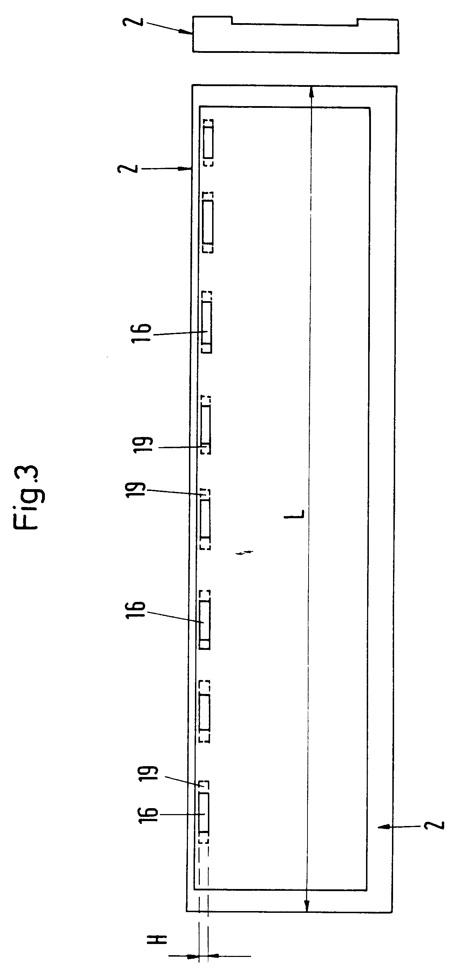

Gemäß der Erfindung ist in Figur 3 die Gegendruckplatte 2 dargestellt, die man sieht, wenn man in Figur 1 unter Weglassung der dortigen Vorsprünge 7 die erfindungsgemäß vorgesehenen Öffnungen 16 anordnet mit den sich dahinter erweiternden Aufnahmeräumen 19. Die Gegendruckplatte 2 hat die Länge L, weil acht Öffnungen 16 in einer Reihe hintereinander angeordnet sind, so daß acht Halbschalen 11 gleichzeitig so geformt werden könnten, daß ein Rand 10 mit dem benachbarten verbunden ist.

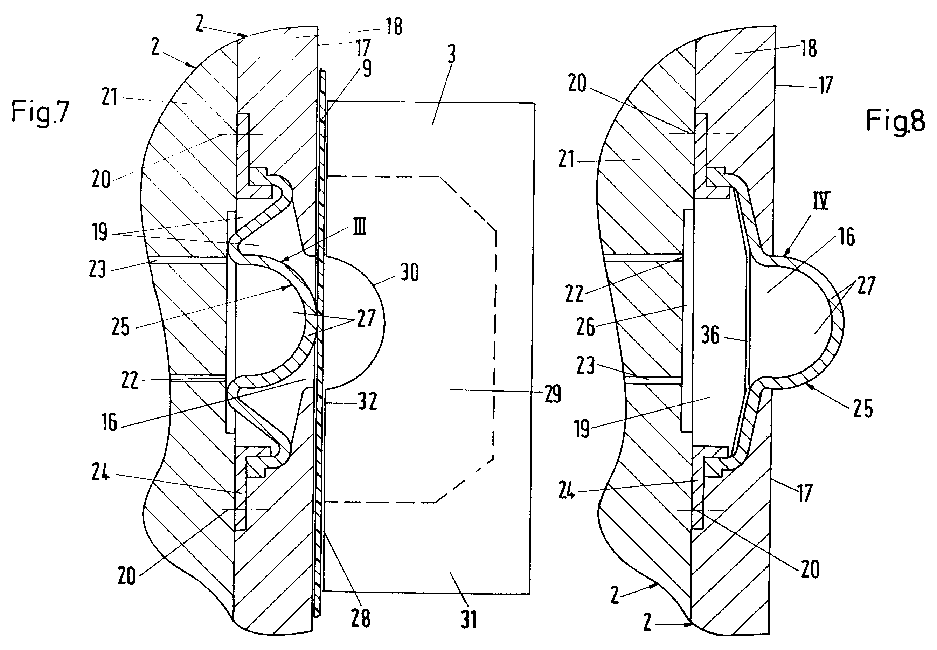

Den besonderen Aufbau der Gegendruckplatte 2 mit den darin befindlichen Öffnungen 16 läßt sich am besten anhand der Figuren 7 und 8 beschreiben. Dort ist jeweils abgebrochen eine Schnittdarstellung der Vorderteile der Gegendruckplatte 2 gezeigt, nämlich derjenigen Vorderteile, die sich direkt an die ebene Anlagefläche 17 anschließen, welche dem Tiefziehwerkzeug 3 zugewandt ist. Die Anlagefläche 17 ist die ebene Oberfläche einer sogenannten Kontaktplatte 18, in welcher sich - in den Figuren 7 und 8 von rechts nach links blickend die Öffnungen 16 befinden, die in Figur 3 in der Draufsicht dargestellt sind. Da es sich bei der Darstellung der Figuren 7 und 8 nur um einen Ausschnitt handelt, ist dort auch nur eine Öffnung 16 zu sehen. Aus herstellungstechnischen und Vereinfachungsgründen ist der sich hinter der Öffnung 16 anschließende Aufnahmeraum 19 auch in der Kontaktplatte 18 durch Fräs- oder Dreharbeiten hergestellt. Der Aufnahmeraum 19 erweitert sich hinter der Öffnung 16, weshalb in Figur 3 der Aufnahmeraum 19 an seinen Seiten gestrichelt dargestellt ist. Über eine in den Figuren 7 und 8 nur als gestrichelte Linie dargestellte Befestigungseinrichtung 20, wie z.B. eine Verschraubung, ist die Kontaktplatte 18 mit einer sich hinter dem Aufnahmeraum 19 angeordneten Heizplatte 21 verbunden. Die Heizplatte 21 der Gegendruckplatte 2 ist außerdem mit zwei zum Aufnahmeraum 19 hin mündenden Druckluftöffnungen 22 versehen, hinter denen sich Druckluftleitungen 23 anschließen, die mit nicht dargestellten Kompressoren verbunden sind. Außerdem befinden sich im Bereich der Befestigungseinrichtung 20, an der Heizplatte anliegend und in die Kontaktplatte 18 eingelassen, Haltewinkel 24 z.B. aus Stahl, um durch ihre im Querschnitt L-förmige Gestalt eine Hinterschneidung zu schaffen zur Befestigung des allgemein mit 25 bezeichneten Formteils.

In den Figuren 7 und 8 von rechts gesehen, erweitert sich also die Öffnung 16 nach rechts und links bzw. gemäß den Figuren 7 und 8 nach oben und unten und bildet damit den Aufnahmeraum 19 für das Formteil 25, welches über die Haltewinkel 24 aus Stahl über die Befestigungseinrichtungen 20, wie z.B. Schrauben, fest an der Gegendruckplatte 2 angebracht sind. In dem rückwärtigen Teil der Gegendruckplatte 2, nämlich der Heizplatte 21, befindet sich außerdem mittig eine seichte Einsenkung 26 zur Aufnahme des Mittelteils 27 des elastischen Formteils 25, und zwar nur an seinem Rand zur Abstützung, wie in der Position des Formteils 25 in Figur 7 gezeigt ist. Es ist zu beachten, daß das Mittelteil 27 des elastischen Formteils 25 die Gestalt eines - wenn auch teilweise hohlen - einseitig abgeschnittenen Tellers oder einer Scheibe hat, denn diese Scheibe ist notwendig, um eine Abdichtung im Tiefziehwerkzeug 3 vorzusehen, wie noch beschrieben wird.

In Figur 7 ist das Tiefziehwerkzeug 3 in Draufsicht dargestellt, und es versteht sich auch hier, daß bei einer Verwendung einer Gegendruckplatte 2, wie sie in Figur 3 gezeigt ist, dann auch das Tiefziehwerkzeug 3 entsprechend länglich ausgebildet ist mit entsprechend vielen Stationen. Zum Verständnis der vorliegenden Erfindung genügt es aber, hier nur eine Station des Tiefziehwerkzeuges 3 zu erläutern. Die Vorderfläche des Tiefziehwerkzeuges 3 ist eben, und zwischen diesen und der Gegendruckplatte 2 liegt im Betrieb die in Figur 7 abgebrochen und im Querschnitt dargestellte Kunststoffplatte 9, die auch in Figur 1 gestrichelt angedeutet ist. Man könnte sich das Tiefziehwerkzeug 3 wie einen Block vorstellen, in welchem aber von der Vorderfläche 28 aus ein Tiefziehhohlraum 29 eingelassen ist, dessen Kontur in Figur 7 gestrichelt dargestellt ist. Im Vorderbereich, d.h. in der Anlageebene 28 ist der Tiefziehhohlraum 29 vollständig offen. Eine Öffnung besteht auch zu einer Seitenwand hin, nämlich derjenigen, wo in Figur 7 ein Halbkreis zu erkennen ist und mit Ausnehmung 30 bezeichnet ist. Selbst wenn also die Kunststoffplatte 9 zwischen Gegendruckplatte 2 und Tiefziehwerkzeug 3 eingeklemmt würde und wenn das Tiefziehwerkzeug 3 im Bereich außerhalb des Tiefziehhohlraumes 29 die Kunststoffplatte 9 rahmenartig festklemmt, steht der schalenförmige Tiefziehhohlraum 29 doch über diese domartige Ausnehmung 30 mit der Umgebung in Verbindung. Diese teilscheibenförmige Fläche infolge der domartigen Ausnehmung 30 soll letztlich vom Mittelteil 29 des elastischen Formteils 25 abgedichtet werden. In Draufsicht auf Figur 7 erkennt man am Tiefziehwerkzeug 3 die dem Betrachter zugewandte Seitenwand 31, hinter welcher sich (deshalb gestrichelt gezeigt) der Tiefziehhohlraum 29 befindet. Am Rand 32 dieser Seitenwand 31 schließt sich also etwa halbkreisförmig oder scheibenförmig die domartige Ausnehmung 30 an, wobei der Rand 32 dieser Seitenwand 31 in der ebenen Fläche 28 des Tiefziehwerkzeuges 3 angeordnet zu denken ist.

In Figur 7 ist das elastische Formteil 25 in seiner ersten zurückgezogenen Stellung III dargestellt, in der es sich auch mit der Vorderseite des Mittelteils 27 bündig hinter der Anlagefläche 17 der Kontaktplatte 18 befindet. Hingegen ist in Figur 8 die zweite Dichtstellung IV des Formteils 25 gezeigt, in welcher sich dessen Mittelteil 27 in der domartigen Ausnehmung 30 am Rand 32 des Tiefziehwerkzeuges 3 befindet. Man erkennt, wie das Mittelteil 27 aus der Anlagefläche 17 etwa halbkreisförmig heraussteht und andererseits gemäß Darstellung der Figur 7 vollkommen in den Aufnahmeraum 19 hinter die Anlagefläche 17 der Gegendruckplatte 2 zurückgezogen werden kann (Stellung III).

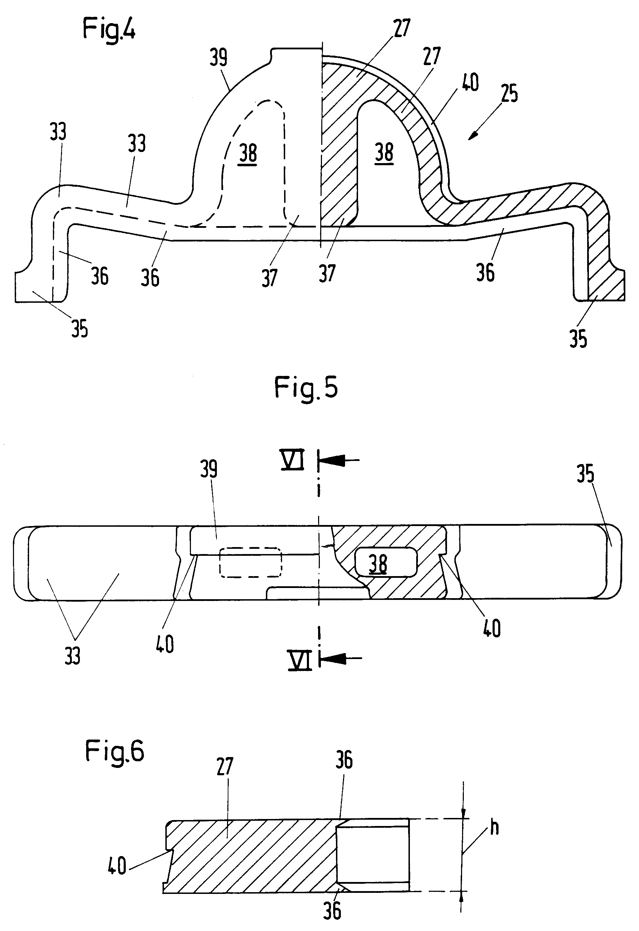

Das elastische Formteil 25 aus Gummi ist mit Einzelheiten in den Figuren 4 bis 6 dargestellt und wird anhand derselben nun beschrieben. Ähnlich der Darstellung der Figuren 7 und 8 ist die Darstellung des Formteiles 25 in Figur 4. Man erkennt das Mittelteil 27, welches über ein Scharnier 33 zu beiden Seiten mit Verankerungsfüßten 34 einstückig verbunden ist. Über die gesamte Unterseite des Formteils 25 verläuft auf jeder Seite eine Lippe 36, die in den Figuren 4, 6 und 8 zu erkennen ist. Sie dient wie bei einer Luftpumpe dazu, daß bei der Beaufschlagung des Aufnahmeraumes 19 mit Druckluft (in den Figuren 7 und 8 von links), nämlich von der Lippenseite her, der Aufbau eines Überdruckes möglich ist, weil eine Abdichtwirkung mit den benachbarten Werkzeugflächen erfolgt und ein Luftstau entsteht. Dadurch kann das Formteil 25 von seiner zurückgezogenen ersten Stellung III in seine ausgedehnte zweite Dichtstellung IV kommen, in weicher das Mittelteil 27 des elastischen Formteils 25 aus der Anlagefläche 17 nach außen in die domartige Ausnehmung 30 des Tiefziehwerkzeuges 3 hineinragt.

Das Mittelteil 27 des Formteils 25 ist aus herstellungstechnischen Gründen, wenn es aus Gummi gegossen wird, mit einem Stützstempel 37 und daneben angeordneten Hohlräumen 38 versehen.

Außerdem weist das Mittelteil 27 auf seiner dem Tiefziehwerkzeug 3 zugewandten Oberfläche 39 eine Kante 40 auf, die im Querschnitt der Figuren 5 und 6 erkennbar eine reichlich halbkreisförmige Schulter bildet, damit sich das teilscheibenförmige Mittelteil 27 des elastischen Formteils 25 in der Dichtstellung IV an der Kante der domartigen Ausnehmung 30 abstützen kann, und zwar so, daß das Mittelteil 27, welches im wesentlichen in der abzudichtenden Seitenwand 31 des Tiefziehwerkzeuges 3 angeordnet ist, sich abstützen kann und in der Ebene dieser Seitenwand 31 gehalten wird. Es soll vermieden werden, daß die Druckluft innerhalb des Tiefziehhohlraumes 29 das Mittelteil 27 nach außen herausdrückt.

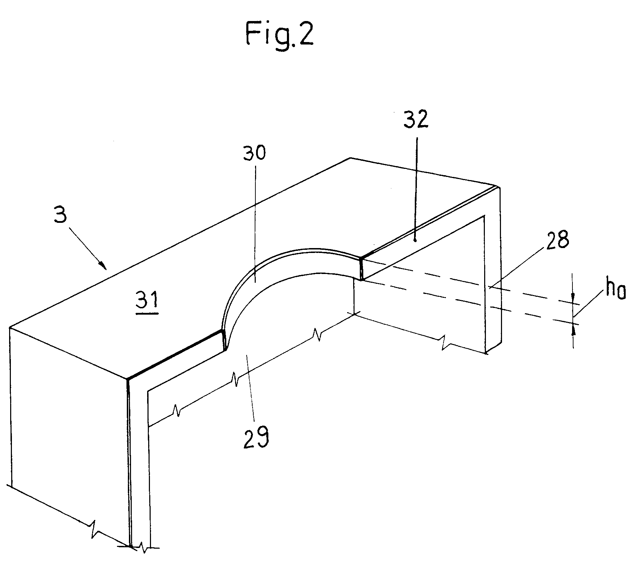

In Figur 2 sieht man eine besondere Ausführungsform eines nur einteiligen Tiefziehwerkzeuges 3 in perspektivischer und gleichwohl etwas schematischer Darstellung.

Das Tiefziehwerkzeug 3 ist in der Draufsicht in Figur 7 gezeigt und stellt sich von schräg oben vorn von der Öffnung wie die Darstellung der Figur 2 dar. Man blickt von vorn in den Tiefziehhohlraum 29, der von einem in der Anlageebene 28 liegenden Rand 28 vorn umzogen wird. Die nicht näher bezeichneten Außenwände des Tiefziehwerkzeuges 3 sind nach oben durch die Oberwand oder in Figur 7 dem Betrachter zugewandte Seitenwand 31 abgeschlossen. Auch der Rand 32 dieser Seitenwand 31 liegt in der Anlageebene 28 bzw. setzt den ebenen Rand 28 in den Bereich der oberen Seitenwand 31 fort. Oben in der Mitte wird dieser Rand 32 durch die domartige Ausnehmung 30 unterbrochen, welche dieselbe Höhe wie der Rand 32 hat und diesen halbkreisförmig, in die obere Seitenwand 31 eingelassen, fortsetzt.

Im Betrieb arbeitet die Vorrichtung derart, daß die Kunststoffplatte 9 gemäß Figur 1 von oben nach unten befördert und dabei so aufgewärmt wird, bis es in der untersten Position I die Tiefziehtemperatur erreicht hat. In dieser Position I (Figur 1) ist die Kunststoffplatte 9 noch eben und auf ganzer Fläche erwärmt. Sie wird nun auf die Gegendruckplatte 2 gelegt und bewegt sich mit dieser in Richtung des Pfeiles 5 nach unten (Figur 1) in die Position II, wo das Formen und Tiefziehen erfolgt.

Nach Erreichen dieser Position II, die auch zu Anfang der Darstellung der Figur 7 entspricht, wird durch die Druckleitungen 23 Druckluft über die Austrittsöffnungen 22 in den Aufnahmeraum 19 für das Formteil 25 auf der rückwärtigen Seite des Formteils 25 aufgebracht, so daß dessen Mittelteil 27 entgegen der Kraft der zwischen Tiefziehwerkzeug 3 und Gegendruckplatte 2 rahmenartig festgeklemmten Kunststoffplatte 9 nach rechts in die domartige Ausnehmung 30 hinein bewegt wird. Bei dieser Bewegung formt sich der Halsbereich, welcher der domartigen Ausnehmung 30 nach Figur 2 entspricht und folglich halbkreisförmig ist.

In derselben Stufe II wird von der Seite der Gegendruckplatte 2 her außerdem Überdruck so aufgebracht, daß die Kunststoffplatte 9 unter Anlage an die Innenwandungen des Tiefziehhohlraumes 29 zur Halbschale 11 geformt werden, wie Figur 1 zeigt. Das Tiefziehen ist möglich, weil auch die domartige Ausnehmung 30 der Seitenwand 31 des Tiefziehwerkzeuges 3 abgedichtet ist und somit der gesamte Tiefziehhohlraum 29 nach außen dicht ist. Dies war der Zweck des elastischen Formteils 25.

Während also die Verankerungsfüße 35 des Formteils 25 in der in den Figuren 7 und 8 dargestellten Weise durch die Stahlwinkel 24 festgehalten werden, erlaubt das Scharnier 33 eine gleichmäßige, harmonische Bewegung des Mittelteils 27 aus der in Figur 7 gezeigten zurückgezogenen ersten Stellung III in die in Figur 8 gezeigte zweite Dichtstellung IV. In letzterer ist die Dichtung vollständig abgeschlossen. Noch bevor das Abdichten und damit die Bewegung des Formteils 25 abgeschlossen ist, beginnt bereits die Beaufschlagung der Kunststoffplatte 9 mit Überdruck derart, daß diese in den Tiefziehhohlraum 29 gedrückt wird. Es versteht sich, daß kleine Luftleitungen dafür sorgen, die Luft hinter der Kunststoffplatte 9 im Tiefziehhohlraum 29 entweichen zu lassen. Die beiden Bewegungen folgen also entweder ohne Zeitverzögerung nacheinander; bevorzugt bei der hier beschriebenen Betriebsweise aber sogar überlappend. Das heißt, das Mittelteil 27 befindet sich noch nicht vollständig in seiner zweiten Dichtstellung IV, da wird schon die Kunststoffplatte 9 von der Seite der Gegendruckplatte her mit Druck beaufschlagt, und der Tiefziehvorgang beginnt. Diese Überlappung wird vorgesehen, damit sich das Material der Kunststoffplatte 9 harmonisch streckt. Letztlich ergibt sich dann der Kragen 15 nach Figur 1, ohne daß die eingangs erwähnten unerwünschten Deformationen vorzufinden sind. Die Gestalt des Kragens 15 des Werkstückes (Halbschale 11) entspricht folgerichtig der Gestalt der domartigen Ausnehmung 30 des Tiefziehwerkzeuges (Figur 2).

### Bezugszeichenliste

- 1: Vorschubwärmebacken
- 2,2': Gegendruckplatten
- 3: Tiefziehwerkzeug
- 4: Gegenheizplatte
- 4'': Isolierplatte
- 4''': Trägerplatte
- 4': Heizung
- 5: Pfeil
- 6: Pfeil
- 7: Vorsprung
- 8: Ausnehmung
- 9: Kunststoffplatte
- 10: Rand
- 11: Halbschale
- 12: Seitenwände
- 13: Boden
- 14: Oberboden
- 15: Kragen
- 16: Öffnungen
- 17: Anlagefläche
- 18: Kontaktplatte
- 19: Aufnahmeräumen
- 20: Befestigungseinrichtung
- 21: Heizplatte
- 22: Austrittsöffnungen
- 23: Druckleitungen
- 24: Stahlwinkel
- 25: Formteil
- 26: Einsenkung
- 27: Mittelteil
- 28: Anlageebene
- 29: Tiefziehhohlraum
- 30: Ausnehmung
- 31: Seitenwand
- 32: Rand
- 33: Scharnier
- 34: Verankerungsfüßen
- 35: Verankerungsfüße
- 36: Lippe
- 37: Stützstempel
- 38: Hohlräume
- 39: Oberfläche
- 40: Kante
- I: unterste Position
- I: Erwärmungsposition
- II: Position
- II: Tiefziehposition
- III: Stellung
- IV: Dichtstellung
- L: Länge

## Patentansprüche

1. Vorrichtung zum Formen und Tiefziehen des Halsbereiches am Rand einer Kunststoffhalbschale (11), mit einem Tiefziehwerkzeug (3) und einer Gegendruckplatte (2), die in zwei Richtungen (5, 6) relativ zueinander bewegbar sind, wobei das Tiefziehwerkzeug (3) schalenförmig einen Tiefziehhohlraum (29) umgibt und in der Seitenwand (31) am Rand (32) eine Ausnehmung (30) aufweist, dadurch gekennzeichnet, daß die Gegendruckplatte (2) in der dem Tiefziehwerkzeug (3) zugewandten Anlagefläche (17) wenigstens eine Öffnung (16) mit einem sich dahinter anschließenden Aufnahmeraum (19) aufweist, in dem ein elastisches, in wenigstens zwei Stellungen (III, IV) bewegbares Formteil (25) derart angebracht ist, daß es in der ersten zurückgezogenen Stellung (III) sich bündig hinter der Anlagefläche (17) befindet und in der zweiten Dichtstellung (IV) in die Ausnehmung (30) am Rand (32) des Tiefziehwerkzeuges (3) hineinragt.

2. Vorrichtung nach Anspruch 1, dadurch gekennzeichnet, daß das elastische Formteil (25) aus Gummi besteht, außen zwei Verankerungsfüße (35) und in der Mitte einen der Kontur der Ausnehmung (30) am Rand (32) des Tiefziehwerkzeuges (3) entsprechendes Mittelteil (27) aufweist, das über ein Scharnier (33) mit den Verankerungsfüßen (35) verbunden ist.

3. Vorrichtung nach Anspruch 1 oder 2, dadurch gekennzeichnet, daß die Höhe (h) des Formteils (25) etwa gleich der Höhe (H) der Öffnung (16) in der Gegendruckplatte (2) und der Höhe (hₐ) des Halses (15) der Kunststoffhalbschale (11) ist.

4. Vorrichtung nach einem der Ansprüche 1 bis 3, dadurch gekennzeichnet, daß der Aufnahmeraum (19) in der Gegendruckplatte (2) Mittel (24) zur Halterung der Verankerungsfüße (35) des elastischen Formteils (25) aufweist und mit Fließmittelöffnungen (22) versehen ist.

5. Vorrichtung nach einem der Ansprüche 1 bis 4, dadurch gekennzeichnet, daß auf der äußeren, dem Tiefziehwerkzeug (3) zugewandten Oberfläche (39) des Mittelteils (27) des elastischen Formteils (25) eine Kante (40) vorgesehen ist.

6. Vorrichtung nach einem der Ansprüche 1 bis 5, dadurch gekennzeichnet, daß die Gegendruckplatte (4) mit einer Mehrzahl von Öffnungen (16) mit sich dahinter erweiternden Aufnahmeräumen (19) versehen ist.

## Claims

1. Apparatus for shaping and deep-drawing the neck region at the edge of a plastics half shell portion (11), comprising a deep-drawing tool (3) and a backing plate (2) which are movable relative to each other in two directions (5, 6), wherein the deep-drawing tool (3) encloses a deep-drawing cavity (29) in a shell-shaped configuration and in the side wall (31) at the edge (32) has an opening (30), characterised in that in the contact surface (17) which is towards the deep-drawing tool (3) the backing plate (12) has at least one aperture (16) with a receiving space (19) which adjoins it therebehind and in which an elastic mould portion (25) which is movable into at least two positions (III, IV) is disposed in such a way that in the first retracted position (III) it is disposed flush behind the contact surface (17) and in the second sealing position (IV) it projects into the opening (30) at the edge (32) of the deep-drawing tool (3).

2. Apparatus according to claim 1 characterised in that the elastic mould portion (25) comprises rubber, and on the outside it has two anchoring feet (35) and in the centre it has a central portion (27) which corresponds to the contour of the opening (30) at the edge (32) of the deep-drawing tool (3) and which is connected to the anchoring feet (35) by way of a hinge (33).

3. Apparatus according to claim 1 or claim 2 characterised in that the height (h) of the mould portion (25) is approximately equal to the height (H) of the aperture (16) in the backing plate (2) and the height (hₐ) of the neck (15) of the plastics half-shell portion (11).

4. Apparatus according to one of claims 1 to 3 characterised in that the receiving space (19) in the backing plate (2) has means (24) for holding the anchoring feet (35) of the elastic mould portion (25) and is provided with flow agent apertures (22).

5. Apparatus according to one of claims 1 to 4 characterised in that an edge (40) is provided on the outer surface (39), which is towards the deep-drawing tool (3), of the central portion (27) of the elastic mould portion (25).

6. Apparatus according to one of claims 1 to 5 characterised in that the backing plate (4) is provided with a plurality of apertures (16) with receiving spaces (19) which are of an enlarging configuration therebehind.

## Revendications

1. Dispositif pour le formage et l'emboutissage profond de la zone du col au bord d'une demi-coque en plastique (11), avec un outillage d'emboutissage profond et une plaque de contre-pression (2), qui peuvent se déplacer l'un par rapport à l'autre dans deux directions (5, 6), où l'outillage d'emboutissage profond (3) entoure, sous forme d'une coque, une cavité d'emboutissage profond (29), et comporte un évidement (30) contre le bord (32) dans la paroi latérale (31), caractérisé en ce que la plaque de contre-pression (2) comporte, dans la surface d'appui (17) en regard de l'outillage d'emboutissage profond (3) au moins une ouverture (16), comportant un logement (19) qui la prolonge par l'arrière, logement dans lequel une pièce façonnée 25, élastique et pouvant se déplacer sur au moins deux positions (III, IV), est disposée de façon à se trouver, dans la première position en retrait (III), an alignement en arrière de la surface d'appui (17), et, dans la deuxième position d'étanchéité (IV), à pénétrer dans l'évidement (30) aménagé sur le bord (32) de l'outillage d'emboutissage profond (3).

2. Dispositif selon la revendication 1, caractérisé en ce que la pièce façonnée élastique (25) est en caoutchouc, et comporte à l'extérieur deux pieds d'ancrage (35), et, dans sa partie centrale, une pièce centrale (27), qui correspond au contour de l'évidement (30) sur le bord (32) de l'outillage d'emboutissage profond (3), pièce centrale qui, par l'intermédiaire d'une charnière (33), est reliée aux pieds d'ancrage (35).

3. Dispositif selon la revendication 1 ou 2, caractérisé en ce que la hauteur (h) de la pièce façonnée (25) est approximativement égale à la hauteur (H) de l'ouverture (16) aménagée dans la plaque de contre-pression (2) et à la hauteur (hₐ) du col (15) de la demi-coque plastique (11).

4. Dispositif selon l'une des revendications 1 à 3, caractérisé en ce que le logement (19) comporte, dans la plaque de contre-pression (2), des moyens (24) destinés à maintenir les pieds d' ancrage (35) de la pièce façonnée élastique (25), et est pourvu d'ouvertures (22) pour des produits fluides.

5. Dispositif selon l'une des revendications 1 à 4, caractérisé en ce qu'une arête (40) est prévue sur la surface extérieure (39), dirigée vers l'outillage d'emboutissage profond (3), de la pièce centrale (27) de la pièce façonnée élastique (25).

6. Dispositif selon l'une des revendications 1 à 5, caractérisé en ce que la plaque de contre-pression (4) est pourvue d'un grand nombre d'ouvertures (16), avec des logements (29) s'élargissant en arrière de ces dernières.
